# EUROPEAN PATENT APPLICATION

(11) **EP 4 597 994 A1**
(43) Date of publication of application: **06.08.2025**
(21) Application number: 23877496.2
(22) Date of filing: 08.09.2023
(51) Int. Cl.: H04M 1/02, G06F 1/16, H01Q 1/24

(54) **CONTACT MEMBER AND SLIDABLE ELECTRONIC APPARATUS COMPRISING SAME**

(30) Priority: 12.10.2022 KR 20220130722; 12.12.2022 KR 20220172917
(71) Applicant: Samsung Electronics Co., Ltd., Suwon-si, Gyeonggi-do 16677 (KR)
(72) Inventor: SON, Cheolhong, Suwon-si Gyeonggi-do 16677 (KR); KIM, Jaehyung, Suwon-si Gyeonggi-do 16677 (KR); KIM, Seunghwan, Suwon-si Gyeonggi-do 16677 (KR); KIM, Jiho, Suwon-si Gyeonggi-do 16677 (KR); SEOL, Kyungmoon, Suwon-si Gyeonggi-do 16677 (KR); LEE, Kookjoo, Suwon-si Gyeonggi-do 16677 (KR); LEE, Yoonjae, Suwon-si Gyeonggi-do 16677 (KR)
(74) Representative: HGF
(86) International application number: PCT/KR2023/013520
(87) International publication number: WO 2024/080566

(57) **Abstract**

An electronic device according to an embodiment may include a first housing including a first surface facing in a first direction, a second surface facing in a second direction opposite to the first direction, and a first side member including a metal material, disposed in a segmented manner to serve as an antenna radiator, and surrounding at least a part of a space between the first and second surfaces; a second housing including a third surface facing in the first direction, a fourth side facing in the second direction, and a second side member surrounding at least a part of a space between the third and fourth surfaces, the second housing for sliding in or out while remaining parallel to the first housing; and a contact structure disposed on the second side member, and electrically connected to the first housing, and the contact structure may include a recess formed in the second side member; and a contact member disposed to be accommodated in the recess with at least a part, having a symmetrical shape, and deformed along the sliding-in or sliding-out direction. Besides, various embodiments obtained from the specification may be possible.

## Description

### [Technical Field]

The present invention relates to a contact structure of a slidable electronic device which slides in or out.

### [Background Art]

A typical portable electronic device may include, for example, a bar type, a sliding type, or a folding type depending on its appearance. A bar-type electronic device may be formed with one housing. A slidable electronic device may be formed with two housings, and may be configured such that one housing slides in/out of the other housing. A folding-type electronic device may have a structure in which two housings are folded or unfolded based on a hinge.

Among various types of the electronic device, the slidable electronic device may adopt a flexible display, to expand a display region if changing from sliding-in to sliding-out. The slidable electronic device may have a ground structure having a separate contact terminal depending on the sliding in/out situation.

### [Disclosure of Invention]

### [Technical Problem]

However, since metal parts included in housings are overlapped, a slidable electronic device may be subject to a parasitic resonance due to the overlapping of the metal parts. Such a parasitic resonance component may degrade performance of an antenna included in the electronic device.

To eliminate the parasitic resonance, the slidable electronic device having a contact structure employs a unidirectional-type C clip contact member in the contact structure, and may be subject to deformation or deviation of the contact member according to repetitive sliding in/out operations, in the sliding in/out operation. The connection structure having such a unidirectional contact member may degrade connection stability. The deformation or the deviation of the contact member may be caused by excessive friction between the metal parts.

### [Solution to Problem]

An electronic device according to an embodiment of the present invention may include a first housing including a first surface facing in a first direction, a second surface facing in a second direction opposite to the first direction, and a first side member including a metal material, disposed in a segmented manner to serve as an antenna radiator, and surrounding at least a part of a space between the first and second surfaces; a second housing including a third surface facing in the first direction, a fourth side facing in the second direction, and a second side member surrounding at least a part of a space between the third and fourth surfaces, the second housing for sliding in or out while remaining parallel to the first housing; and a contact structure disposed on the second side member, and electrically connected to the first housing, and the contact structure may include a recess formed in the second side member; and a contact member disposed to be accommodated in the recess with at least a part, having a symmetrical shape, and deformed along the sliding-in or sliding-out direction. Besides, various embodiments obtained from the specification may be possible.

### [Advantageous Effects of Invention]

According to various embodiments of the present invention, a contact structure may be stabilized, by forming a shape of a contact member in a streamlined shape to thus reduce friction due to movement of an elastic portion in sliding in or out. By stabilizing the contact structure, antenna radiation performance of a slidable electronic device may be achieved.

### [Brief Description of Drawings]

FIG. 1A is a plan view illustrating an electronic device in a sliding-in state according to an embodiment of the present invention.
FIG. 1B is a plan view illustrating an electronic device in a sliding-out state according to an embodiment of the present invention.
FIG. 2 is a plan view illustrating the back of an electronic device in a sliding-out state according to an embodiment of the present invention.
FIG. 3A is a perspective view illustrating an electronic device in a sliding-in state according to an embodiment of the present invention.
FIG. 3B is a perspective view illustrating an electronic device in a sliding-out state according to an embodiment of the present invention.
FIG. 4A is a plan view illustrating the back of an electronic device in a sliding-in state according to an embodiment of the present invention.
FIG. 4B is a plan view illustrating the back of the electronic device in a sliding-out state according to an embodiment of the present invention.
FIG. 5 is a perspective view illustrating an arrangement of a contact structure according to an embodiment of the present invention.
FIG. 6A is a perspective view illustrating a contact structure according to an embodiment of the present invention.
FIG. 6B is a cross-sectional side view illustrating a contact structure according to an embodiment of the present invention.
FIG. 6C is a cross-sectional side view illustrating a contact structure in contact with a second housing according to an embodiment of the present invention.
FIG. 6D is a plan view illustrating a contact structure according to an embodiment of the present invention.
FIG. 7A is a perspective view illustrating a contact structure according to an embodiment of the present invention.
FIG. 7B is a cross-sectional side view illustrating a contact structure in contact with a second housing according to an embodiment of the present invention.
FIG. 7C is a plan view illustrating a contact structure according to an embodiment of the present invention.
FIG. 8A is a perspective view illustrating a contact structure according to an embodiment of the present invention.
FIG. 8B is a cross-sectional side view illustrating a contact structure in contact with a second housing according to an embodiment of the present invention.
FIG. 8C is a plan view illustrating a contact structure according to an embodiment of the present invention.
FIG. 9A through FIG. 9C are side views sequentially illustrating deformation of a contact member in a sliding-in operation according to an embodiment of the present invention.
FIG. 10A through FIG. 10C are side views sequentially illustrating deformation of a contact member in a sliding-out operation according to an embodiment of the present invention.
FIG. 11A is an exemplary diagram illustrating a parasitic component occurring in an electronic device not employing a contact structure according to an embodiment of the present invention, and FIG. 11B is an exemplary diagram illustrating a parasitic component occurring in an electronic device employing a contact structure according to an embodiment of the present invention.
FIG. 12 is a comparative graph illustrating radiation performance without and with a contact structure according to an embodiment of the present invention.
FIG. 13 is a perspective view illustrating a contact structure disposed in an electronic device according to an embodiment of the present invention.
FIG. 14 is a plan view illustrating that a contact structure is disposed close to a side member according to an embodiment of the present invention.
FIG. 15 is a cross-sectional side view illustrating a contact structure according to an embodiment of the present invention.
FIG. 16A is a plan view illustrating an electronic device in a sliding-in state according to an embodiment of the present invention.
FIG. 16B is a plan view illustrating an electronic device in a sliding-out state according to an embodiment of the present invention.

In relation to descriptions of the drawings, like or similar reference numerals may be used for like or similar components.

### [Mode for the Invention]

Hereinafter, various embodiments of the present invention are disclosed with reference to the attached drawings. However, it should be understood that this is not intended to limit the present invention to specific embodiments, and embraces various modifications, equivalents, and/or alternatives of embodiments of the present invention.

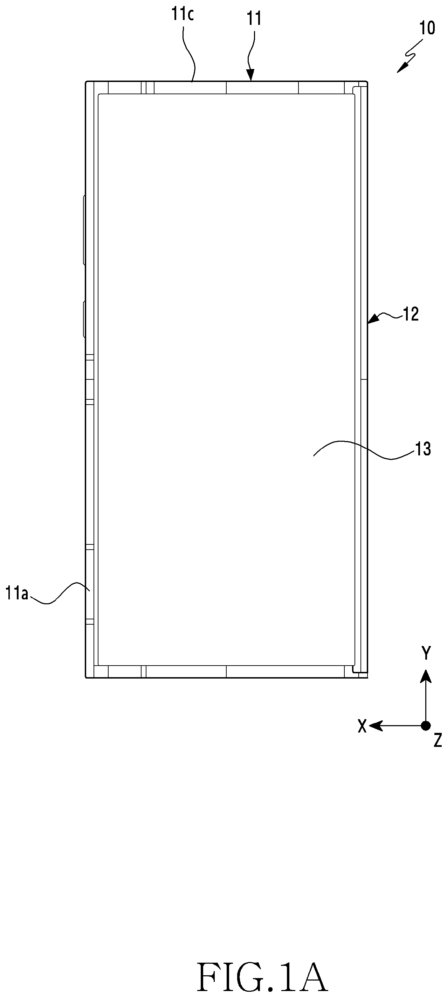

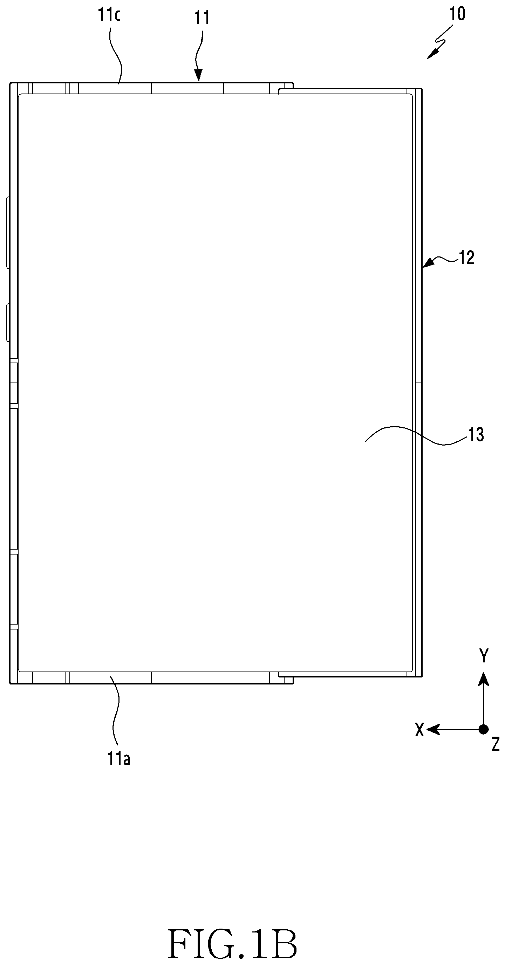

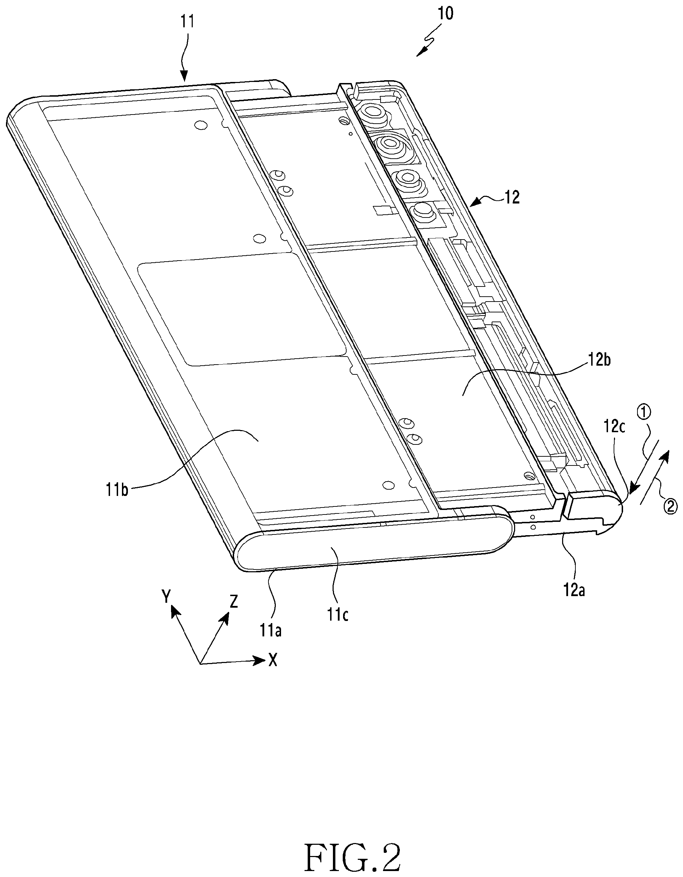

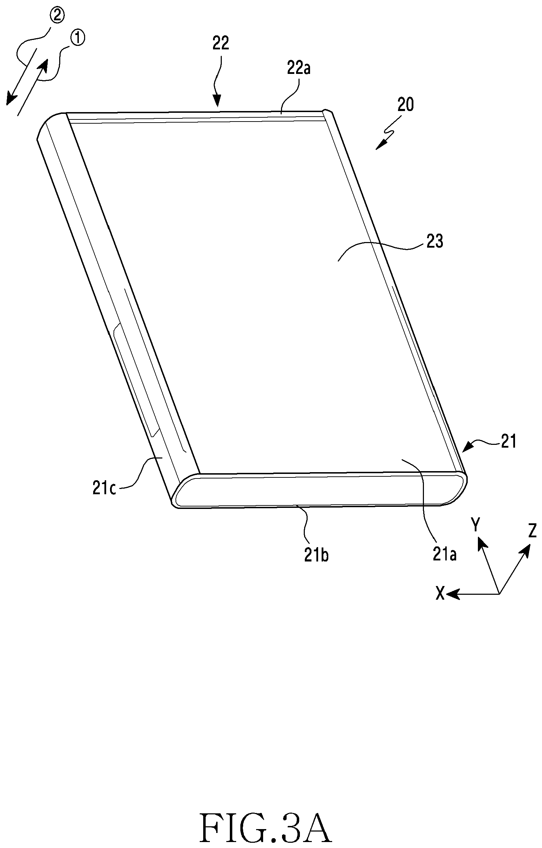

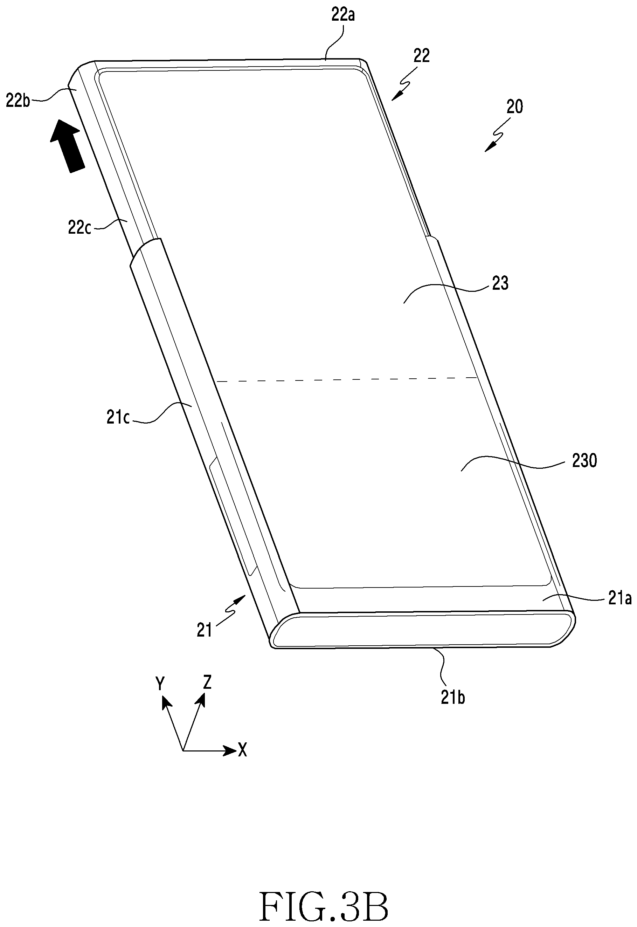

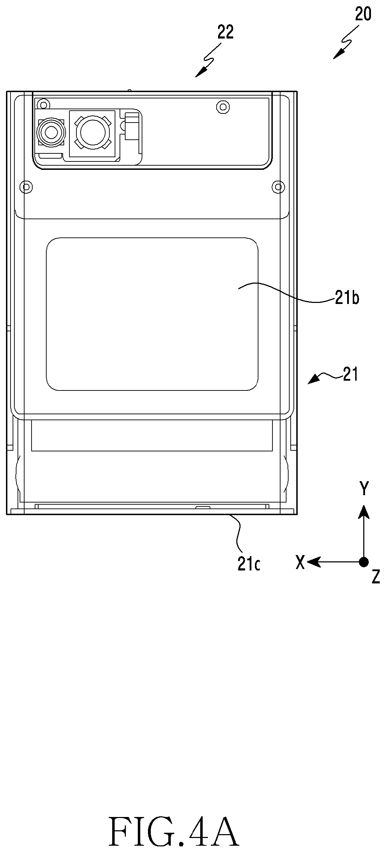

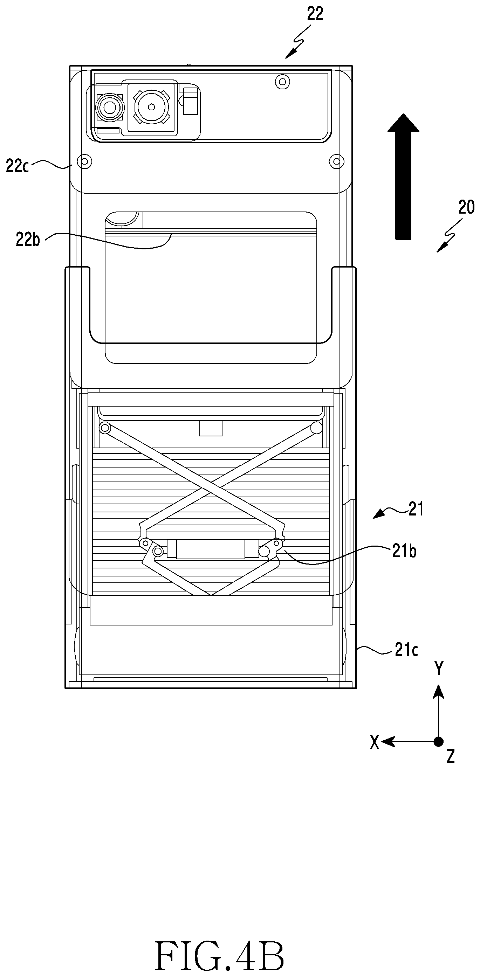

FIG. 1A is a plan view illustrating an electronic device in a sliding-in state according to an embodiment of the present invention. FIG. 1B is a plan view illustrating the electronic device in a sliding-out state according to an embodiment of the present invention. FIG. 2 is a plan view illustrating a back of an electronic device in a sliding-out state according to an embodiment of the present invention. FIG. 3A is a perspective view illustrating an electronic device in a sliding-in state according to an embodiment of the present invention. FIG. 3B is a perspective view illustrating the electronic device in a sliding-out state according to an embodiment of the present invention. FIG. 4A is a plan view illustrating the back of an electronic device in a sliding-in state according to an embodiment of the present invention. FIG. 4B is a plan view illustrating the back of the electronic device in a sliding-out state according to an embodiment of the present invention.

A slidable electronic device 10 for performing a sliding in/out operation is described with reference to FIG. 1 through FIG. 4B. For example, the slidable electronic device may include a rollable electronic device. Hereafter, the slidable electronic device is referred to as an electronic device. In describing the drawings, an orthogonal coordinate system may be used. An x-axis of the orthogonal coordinate system may indicate a horizontal direction of the electronic device (e.g., a housing), a y-axis may indicate a vertical direction of the electronic device, and a z-axis may indicate a thickness direction of the electronic device.

According to an embodiment, the electronic device 10 may be classified into an H-type electronic device in which a second housing 12 slides in or out along the horizontal direction (e.g., the x-axis direction) of a first housing 11, and a V-type electronic device in which the second housing 12 slides in or out along the vertical direction (e.g., the y-axis direction) of the first housing 11.

The H-type electronic device is illustrated in FIG. 1 and FIG. 2, and the V-type electronic device 10 is illustrated in FIG. 3A through FIG. 4B.

Referring to FIG. 1A through FIG. 2, the H-type electronic device 10 may include the first housing 11, the second housing 12, and a flexible display 13. According to an embodiment, the electronic device 10 may include the first housing 11, or the second housing 12 for sliding in or sliding out while remaining parallel to the first housing 11.

According to an embodiment, the first housing 11 may include a first surface 11a facing in a first direction ① (e.g., upward or toward the front of the electronic device), a second surface 11b facing in a second direction ② (e.g., downward or toward the back of the electronic device) which is opposite to the first direction ① and a first side member 11c surrounding at least a part of a space between the first and second surfaces 11a and 11b.

According to an embodiment, the second housing 12 may include a third surface 12a facing in the first direction ①, a fourth surface 12b facing in the second direction ②, and a second side member 12c surrounding at least a part of a space between the third and fourth surfaces 12a and 12b. According to an embodiment, the second surface 11b of the first housing 11 may perform the sliding movement while keeping facing the fourth surface 12b of the second housing 12.

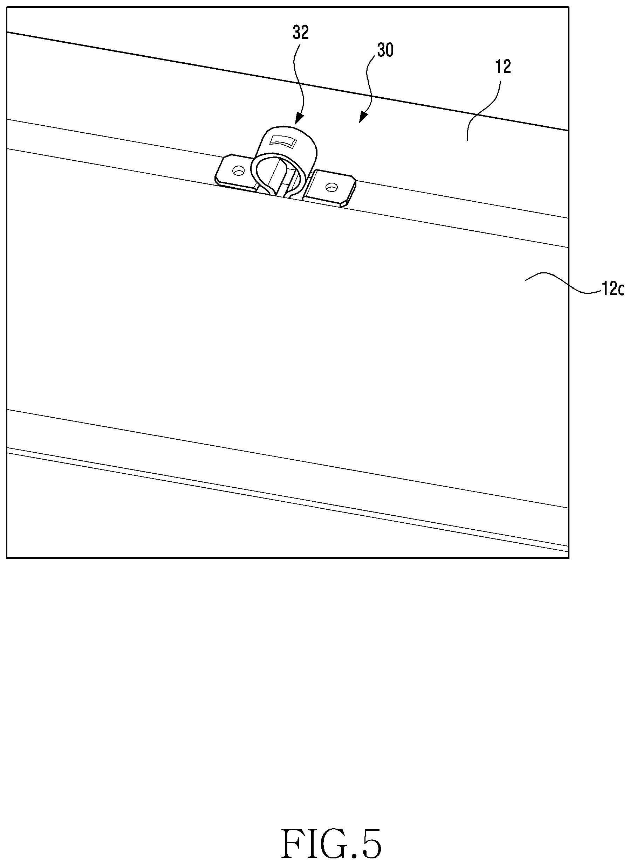

According to an embodiment, at least one or more contact structures for grounding may be disposed between the first housing 11 and the second housing 12. According to an embodiment, the contact structure (e.g., a contact structure 30 shown in FIG. 5) may be disposed on the second side member 12c on one side of the second housing 12, or may be disposed symmetrically on both sides of the second side member 12c.

According to an embodiment, the first housing 11 may be disposed to surround or overlap at least a part of a side surface of the second housing 12. According to an embodiment, if the first housing 11 and the second housing 12 slide, parts of the first side member 11c and the second side member 12c may face each other.

According to an embodiment, the flexible display 13 may expand its display region in a sliding-out operation. According to an embodiment, both ends of the flexible display 13 may be connected to the first housing 11 and the second housing 12 respectively.

FIG. 3A through FIG. 4B illustrate a V-type electronic device 20.

Referring to FIG. 3A through FIG. 4B, the V-type electronic device 20 may include a first housing 21, a second housing 22, or a flexible display 23. According to an embodiment, the electronic device 20 may include the first housing 21, and the second housing 22 for sliding in or out while remaining parallel to the first housing 21.

According to an embodiment, the first housing 21 may include a first surface 21a facing in the first direction ① (e.g., upward or toward the front of the electronic device), a second surface 21b facing in the second direction ② (e.g., downward or toward the back of the electronic device) which is opposite to the first direction ①, and a first side member 21c surrounding at least a part of a space between the first and second surfaces 21a and 21b.

According to an embodiment, the second housing 22 may include a third surface 22a facing in the first direction ①, a fourth surface 22b facing in the second direction ②, and a second side member 22c surrounding at least a part of a space between the third and fourth surfaces 22a and 22b. According to an embodiment, the second surface 21b of the first housing 21 may perform the sliding movement while keeping facing the fourth surface 22b of the second housing 22.

According to an embodiment, at least one or more contact structures for grounding may be disposed between the first housing 21 and the second housing 22. According to an embodiment, the contact structure (e.g., the contact structure 30 shown in FIG. 5) may be disposed on the second side member 22c on one side of the second housing 22, or may be disposed symmetrically on both sides of the second side member 22c.

According to an embodiment, the first housing 11 may be disposed to surround at least a part of a side surface of the second housing 12. According to an embodiment, if the first housing 11 and the second housing 12 perform the sliding operation, at least a part of the first side member 11c and the second side member 12c may face each other.

According to an embodiment, the flexible display 23 may expand its display region in the sliding-out operation. According to an embodiment, both ends of the flexible display 23 may be connected to the first housing 21 and the second housing 22 respectively.

FIG. 5 is a perspective view illustrating an arrangement of a contact structure according to an embodiment of the present invention.

Referring to FIG. 5, a contact structure 30 may be disposed substantially identically in the electronic device 10 shown in FIG. 1A through FIG. 2, or the electronic device 20 shown in FIG. 3A through FIG. 4B. Accordingly, hereinafter, the arrangement in the electronic device 10 shown in FIG. 1A through FIG. 2B is described by way of example.

According to an embodiment, the contact structure 30 may be a grounding structure formed between the first and second housings 11 and 12, to electrically connect and ground the first and second housings 11 and 12.

According to an embodiment, the contact structure 30 is disposed on the second side member 12c of the second housing 12, but it is not limited to this structure, and it may be formed in the first housing 11 substantially in the same manner. The structure in which the contact structure 30 is formed in the first housing 11 shall be described.

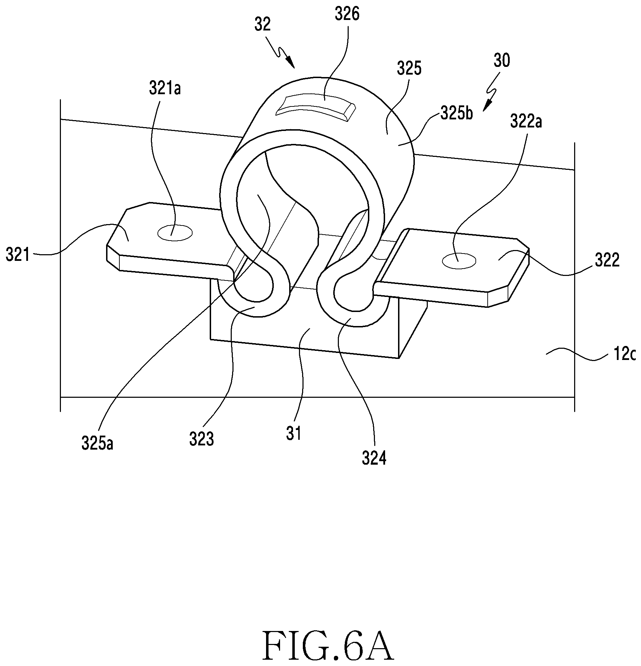

According to an embodiment, the contact structure 30 may be disposed in a protruding shape, with at least a part accommodated in a recess (e.g., a recess 31 shown in FIG. 6A) formed in the second side member 12c of the second housing 12.

According to an embodiment, a contact member 32 of the contact structure 30 may be a part having a shape for moving along the sliding direction of the first housing 11, and disposed to flexibly move vertically and in both sliding directions due to friction with the second housing 12.

According to an embodiment, the contact member 32 may provide a ground function, by providing an electrical connection path for electrically connecting the first and second housings 11 and 12.

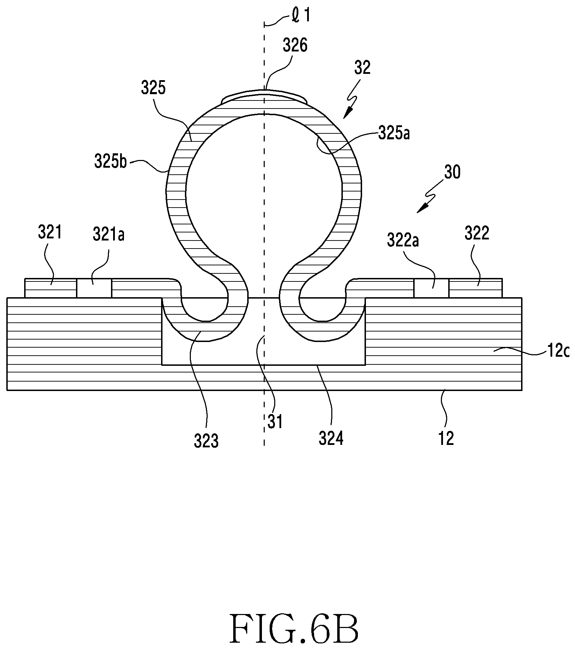

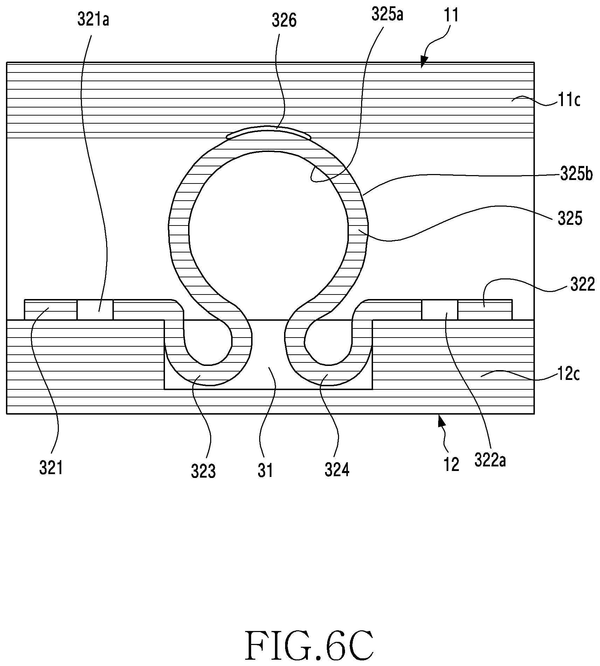

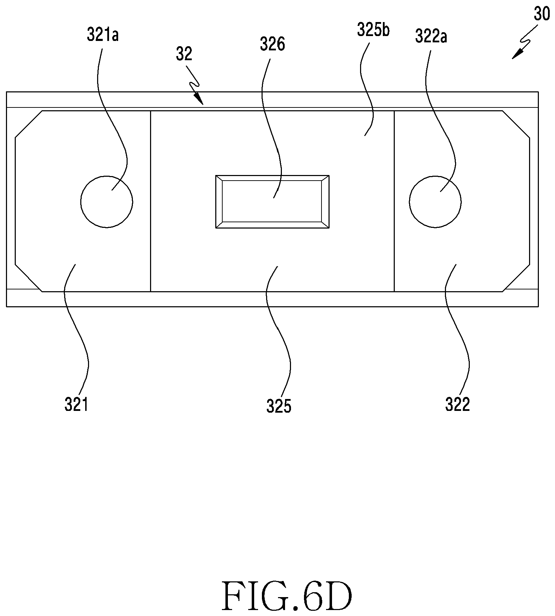

FIG. 6A is a perspective view illustrating a contact structure according to an embodiment of the present invention. FIG. 6B is a cross-sectional side view illustrating the contact structure according to an embodiment of the present invention. FIG. 6C is a cross-sectional side view illustrating the contact structure in contact with a second housing according to an embodiment of the present invention. FIG. 6D is a plan view illustrating the contact structure according to an embodiment of the present invention.

Referring to FIG. 6A through FIG. 6D, the contact structure 30 according to an embodiment may include a recess 31, or a contact member 32. According to an embodiment, the contact structure 30 may be disposed on the second side member 12c of the second housing 12, with at least a part accommodated in the recess 31 of the contact member 32. For example, the contact member 32 may be fixed to the second side member 12c using a soldering process or a fastener (e.g., a screw).

At least one or more contact structures 30 according to an embodiment may be disposed on the second side member 12c of the second housing 12. According to an embodiment, the contact structure 30 may include at least one or more contact members 32 symmetrically/asymmetrically disposed in the second housing 12. For example, the contact member 32 may be disposed on one side surface of the second side member 12c, or may be disposed symmetrically or asymmetrically on both sides.

According to an embodiment, the contact member 32 is an electrical connection member for electrically connecting the first housing 11 and the second housing 12, for example, a ground member, and may be flexibly deformed to reduce the friction in the sliding-in/out operation of the electronic device 10. According to an embodiment, the contact member 32 may include a structure advantageous for maintaining the connection state with the first housing 11 at all times, in the symmetrical shape based on a reference line l1. According to an embodiment, the contact member 32 may have a symmetrical shape from a vertical front view in the sliding direction of the second housing 12.

According to an embodiment, the contact member 32 may move to the left or to the right, and may move upward and downward, in the sliding in/out operation of the second housing 12. According to an embodiment, the contact member 32 may include a first support portion 321, a second support portion 322, first and second bending portions 323 and 324, or an elastic portion 325. According to an embodiment, the first support portion 321 is one side fastener for securing the contact member 32 being accommodated in the recess 31, and may be fastened on one side of the recess 31 using a soldering process or a fastener. According to an embodiment, the second support portion 322 is the other side fastener for securing the contact member 32 being accommodated in the recess 31, and may be fastened on the other side of the recess 31 using a soldering process or a fastener (e.g., a screw). According to an embodiment, the first support portion 321 may include a first hole 321a into which a screw is inserted or soldered, and according to an embodiment, the second support portion 322 may include a second hole 322a into which a screw is inserted or soldered.

According to an embodiment, the contact member 32 may include the first and second bending portions 323 and 324 to allow elastic deformation of the elastic portion 325. The first bending portion 323 may be a portion bending over at least a first angle in the first support portion 321, and the second bending portion 324 may be a portion bending over at least the first angle in the second support portion 322. For example, the first angle may be about 90 degrees.

According to an embodiment, the contact member 32 may include the elastic portion 325 for maintaining the contact with the first housing 11, and moving up and down (pressed and deformed in the vertical direction) in the sliding-in or sliding-out operation of the second housing 12, or deformed along the sliding direction. According to an embodiment, the elastic portion 325 may include an elastically deformable shape by bending from the first and second bending portions 323 and 324. For example, the elastic portion 325 may have a substantially curved shape, for example, a ring shape, when viewed from a vertical direction to the sliding direction of the contact member 32. For example, the first and second bending portions 323 and 324 and the elastic portion 325 may have an approximately omega (Ω) shape when viewed from the vertical direction of the sliding direction of the contact member 32.

According to an embodiment, the elastic portion 325 may move in the sliding direction in the sliding-in operation or the sliding-out operation of the second housing 12.

According to an embodiment, the first bending portion 323 and the second bending portion 324 may be disposed with at least a part accommodated in the recess 31, and may be subject to the elastic deformation while being accommodated in the recess 31. The first bending portion 323 and the second bending portion 324 have a symmetrical shape, and adjust the elastic force provided by the elastic portion 325 depending on the bending angle.

According to an embodiment, the elastic portion 325 may include an inner surface 325a and an outer surface 325b, and a connection protrusion 326 may be formed in a center portion of the outer surface 325b. According to an embodiment, the connection protrusion 326 may be in a shape extending along the center portion of the outer surface 325b, and protruding from the center of the elastic portion 325 in an outer circumferential direction. The connection protrusion 326 may contact a metal portion of the first housing 12.

According to an embodiment, if at least a part of the contact member 32 is accommodated in the recess 31, a portion of the first and second bending portions 323 and 324 may be positioned outside the recess 31, and after the contact member 32 is received in 31 to contact the first housing 12, most of the first and second bending portions 323 and 324 may be positioned in the recess 31.

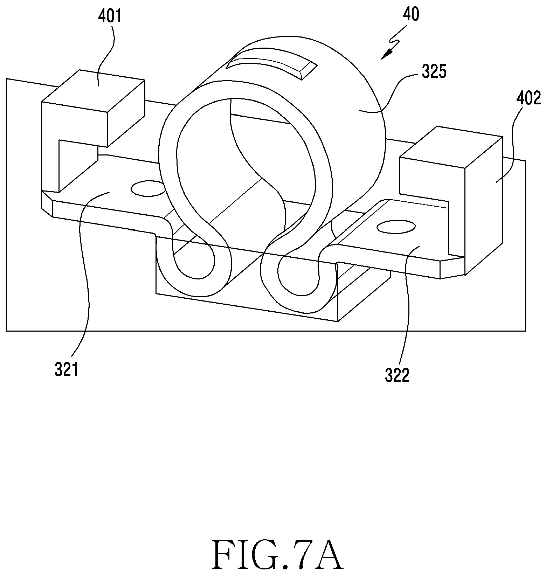

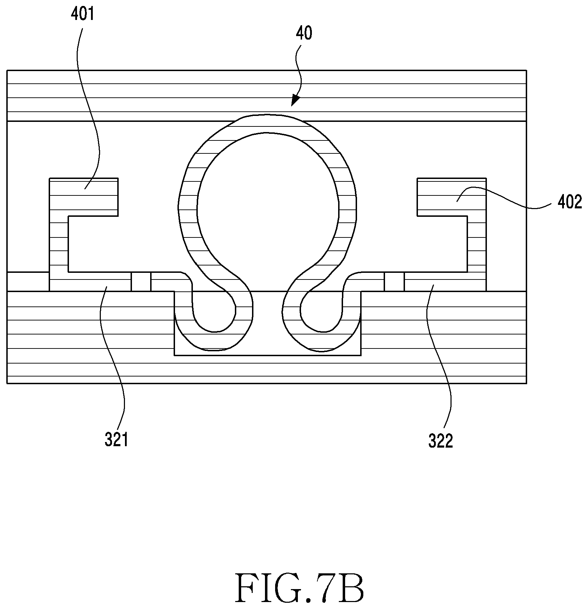

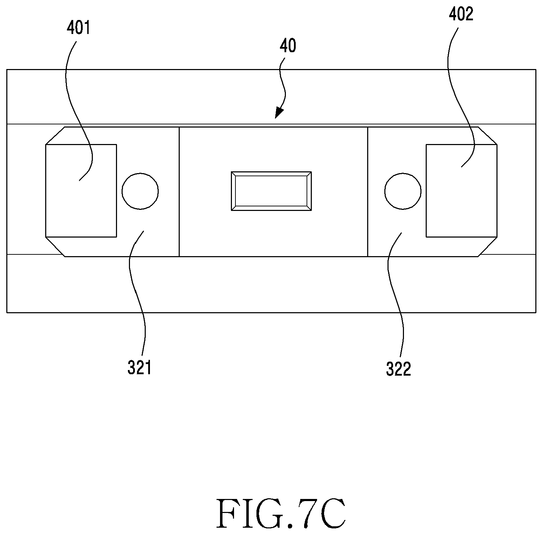

FIG. 7A is a perspective view illustrating a contact structure according to an embodiment of the present invention. FIG. 7B is a cross-sectional side view illustrating the contact structure in contact with a second housing according to an embodiment of the present invention. FIG. 7C is a plan view illustrating the contact structure according to an embodiment of the present invention.

Referring to FIG. 7A through FIG. 7C, a contact member 40 according to an embodiment is described only in differences, while omitting the description on the substantially identical configuration compared to the contact member 32 shown in FIG. 6A. According to an embodiment, the contact member 40 may further include at least one or more stoppers 401 and 402. According to an embodiment, the stoppers 401 and 402 may be formed to block excessive movement of the elastic portion 325.

According to an embodiment, the contact member 32 may include the first stopper 401 formed on the first support portion 321, or the second stopper 402 formed on the second support portion 322. According to an embodiment, the first stopper 401 may be spaced apart from the elastic portion 325 while facing it, and the second stopper 402 may be formed to be spaced apart from the elastic portion 325 while facing it. According to an embodiment, the first stopper 401 may be formed to extend from the first support portion 321 in the vertical direction, and the second stopper 402 may be formed to extend from the second support portion 322 in the vertical direction. For example, a portion facing and contacting the elastic portion 325 in each of the first and second stoppers 401 and 402 has a rectangular shape, but is not limited to this shape, and may be formed in various shapes. According to an embodiment, the first stopper 401 may be formed by bending from the first support portion 321 toward the first side member 11c, and the second stopper 402 may be formed by bending from the second support portion 322 toward the first side member 11c.

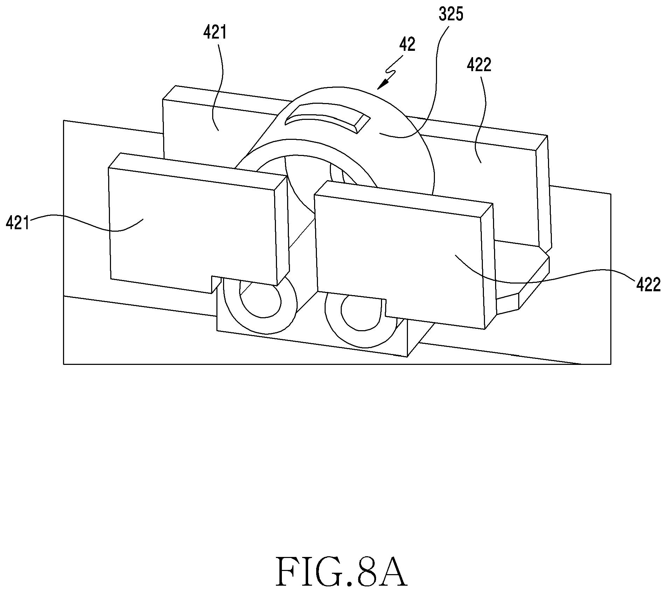

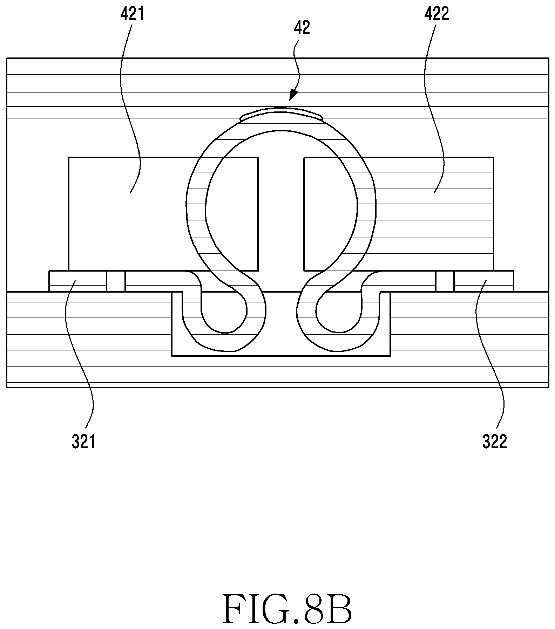

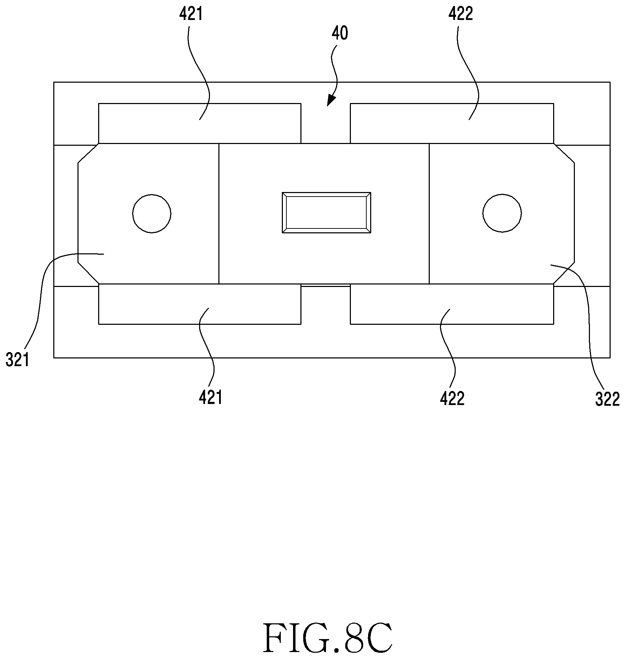

FIG. 8A is a perspective view illustrating a contact structure according to an embodiment of the present invention. FIG. 8B is a cross-sectional side view illustrating the contact structure in contact with a second housing according to an embodiment of the present invention. FIG. 8C is a plan view illustrating the contact structure according to an embodiment of the present invention.

Referring to FIG. 8A through FIG. 8C, a contact member 42 according to an embodiment is described only in differences, by omitting the description on the substantially identical configuration compared to the contact member 32 shown in FIG. 6A. According to an embodiment, the contact member 42 may further include at least one or more guide walls 421 and 422. According to an embodiment, the guide walls 421 and 422 may be formed to enhance contact stability of the elastic portion 325.

According to an embodiment, the contact member 42 may include the first guide wall 421 formed on the first support portion 321, and/or the second guide wall 422 formed on the second support portion 322. According to an embodiment, the first guide wall 421 may be formed to be spaced apart from the elastic portion 325 and to face it. The second guide wall 422 may be formed to be spaced apart from the elastic portion 325 and to face it. According to an embodiment, the first guide wall 421 may be formed toward the first side member 11c on the first support portion 321, and the second guide wall 422 may be formed toward the first side member 11c on the second support portion 322. For example, the first and second guide walls 421 and 422 each have a rectangular shape, but is not limited to this shape, and may be formed in various shapes.

According to an embodiment, the first guide wall 421 may be bent at a right angle on the first support 321 and formed as a pair, and the second guide wall 422 may be bent at a right angle on the second support 322 and formed as a pair.

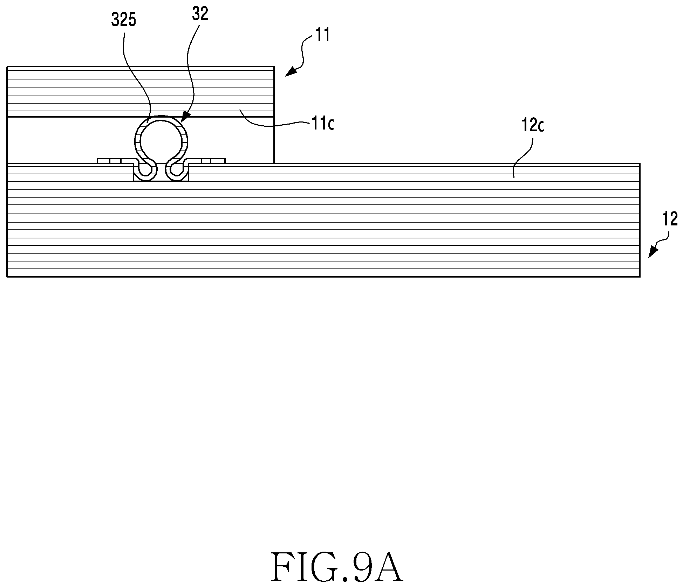

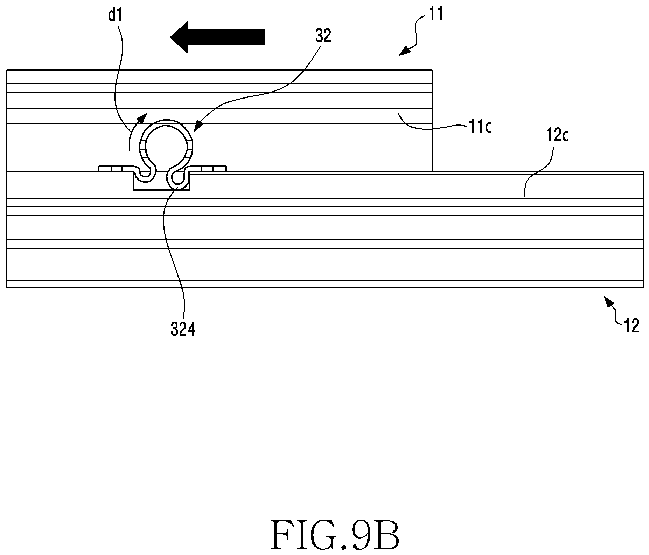

FIG. 9A through FIG. 9C are side views sequentially illustrating deformation of a contact member in a sliding-in operation according to an embodiment of the present invention.

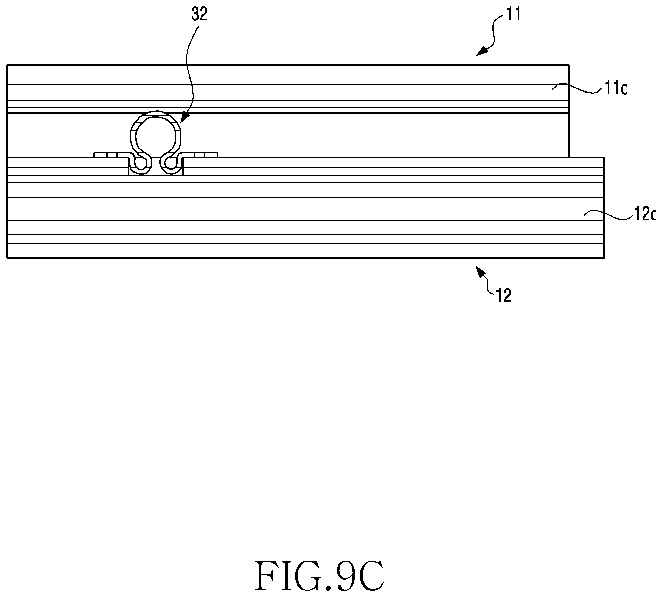

Referring to FIG. 9A through FIG. 9C, according to an embodiment, in the state shown in FIG. 9A, if the second housing 12 slides in, the elastic portion 325 may be moved slightly in a direction opposite to the sliding by the friction between the first housing 11 and a connection protrusion (e.g., the contact protrusion 326 shown in FIG. 6A) of the contact member 32, and concurrently the second bending portion 324 may be slightly tilted clockwise (e.g., along an arrow d1) and the second bending portion 324 may be compressed. Referring to FIG. 9C, if stopping after the movement, the contact member 32 may return to its initial position, for example, the state as shown in FIG. 9A.

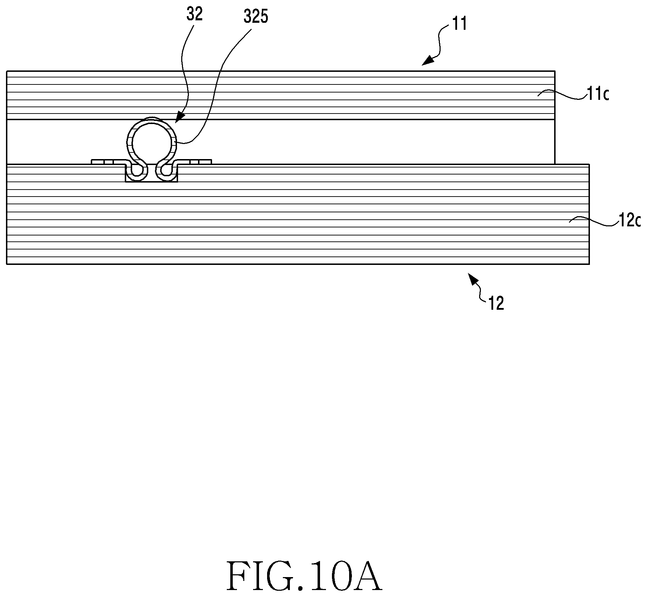

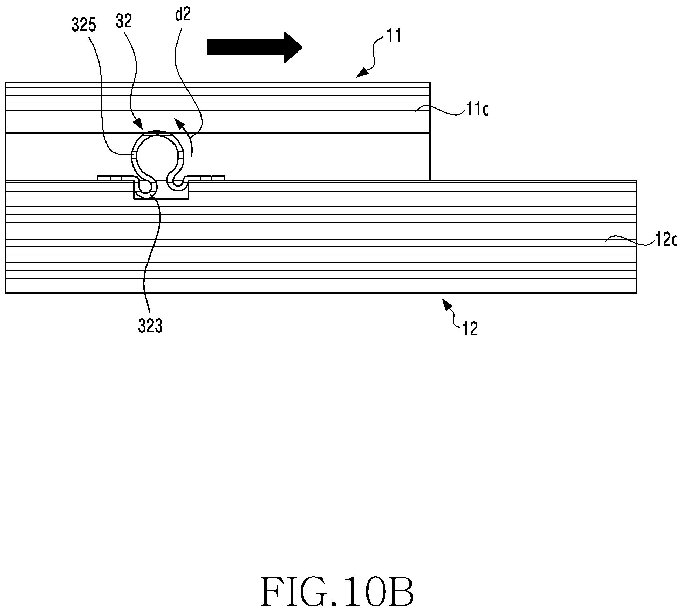

FIG. 10A through FIG. 10C are side views sequentially illustrating deformation of a contact member in a sliding-out operation according to an embodiment of the present invention.

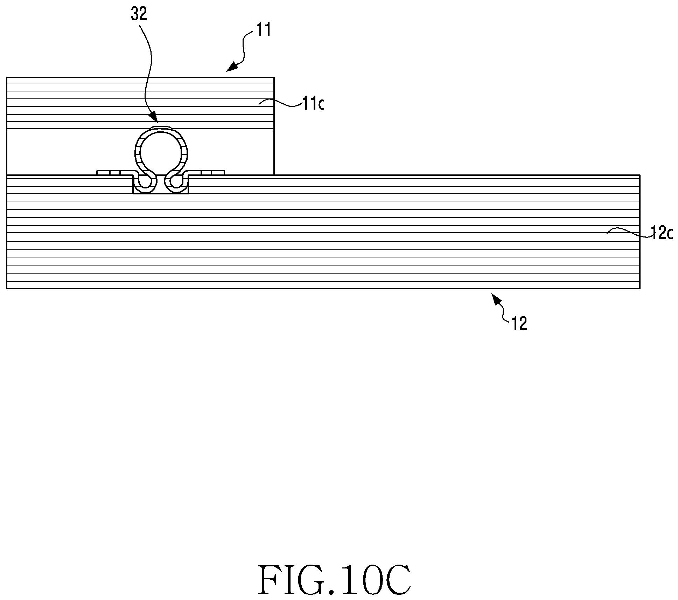

Referring to FIG. 10A through FIG. 10C, according to an embodiment, if the second housing 12 is slid out in the state shown in FIG. 10A, the elastic portion 325 may be moved slightly in a direction opposite to the sliding by the friction between the first housing 11 and a connection protrusion (e.g., the contact protrusion 326 shown in FIG. 6A) of the contact member 32, and concurrently the first bending portion 323 may be slightly tilted counterclockwise d2 and the second bending portion 324 may be compressed. Referring to FIG. 10C, if stopping after the movement, the contact member 32 may return to its initial position, for example, the state as shown in FIG. 10A.

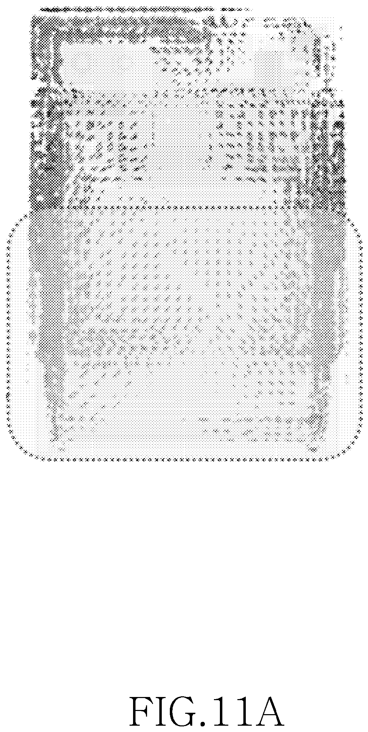

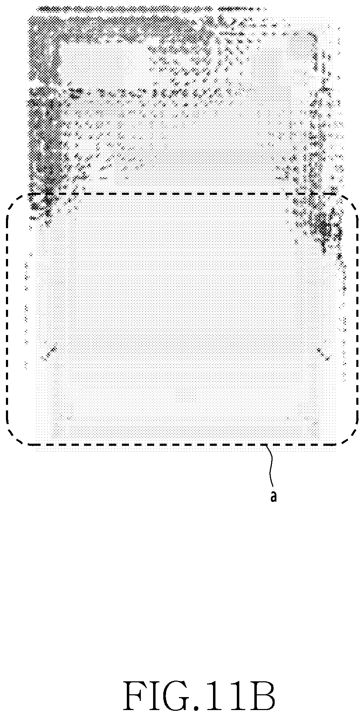

FIG. 11A is an exemplary diagram illustrating a parasitic component occurring in an electronic device not employing a contact structure according to an embodiment of the present invention, and FIG. 11B is an exemplary diagram illustrating a parasitic component occurring in the electronic device employing the contact structure according to an embodiment of the present invention.

Referring to FIG. 11A and FIG. 11B, it may be identified that, if the contact structure (e.g., the contact structure 30 shown in FIG. 5) is not applied to the electronic device (e.g., the electronic device 20 shown in FIG. 3A) according to an embodiment, the parasitic resonance component generated by the overlapping structure between the metals included in the first and second housings (e.g., the first and second housings 21 and 22 as shown in FIG. 3A) is widespread (shown in FIG. 11A), whereas, if the contact structure 30 is applied to the electronic device 20, the parasitic resonance component generated by the overlapping structure between the metals included in the first and second housings (e.g., the first and second housings 21 and 22 shown in FIG. 3A) is partially distributed (as shown in FIG. 11B), for example, the parasitic resonance component hardly occurs in a lower region a.

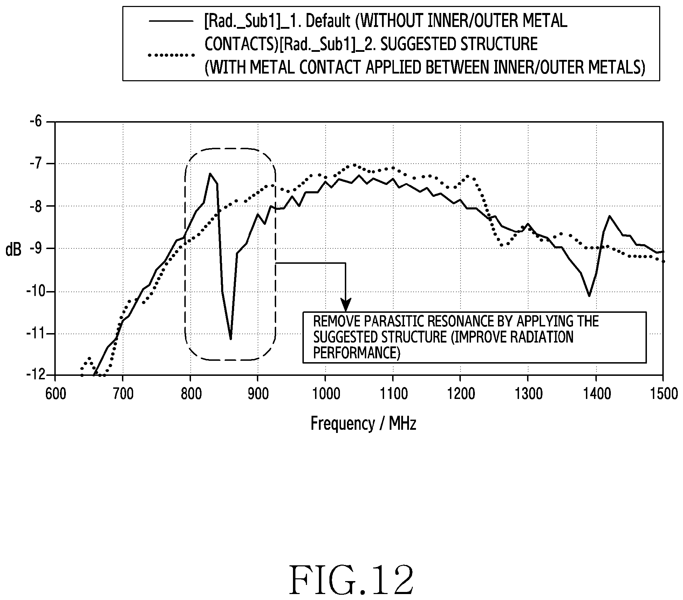

FIG. 12 is a comparative graph illustrating radiation performance without and with a contact structure according to an embodiment of the present invention.

Referring to FIG. 12, if the contact structure (e.g., the contact structure 30 shown in FIG. 5) is applied to the electronic device (e.g., the electronic device 30 shown in FIG. 3A) according to an embodiment, the parasitic component occurring in a specific region (e.g., in the lower region a shown in FIG. 11B) may be removed, thus improving radiation performance of an antenna, for example, an antenna including at least a part of the second side member (the side member operates as a radiator) disposed in the electronic device 10.

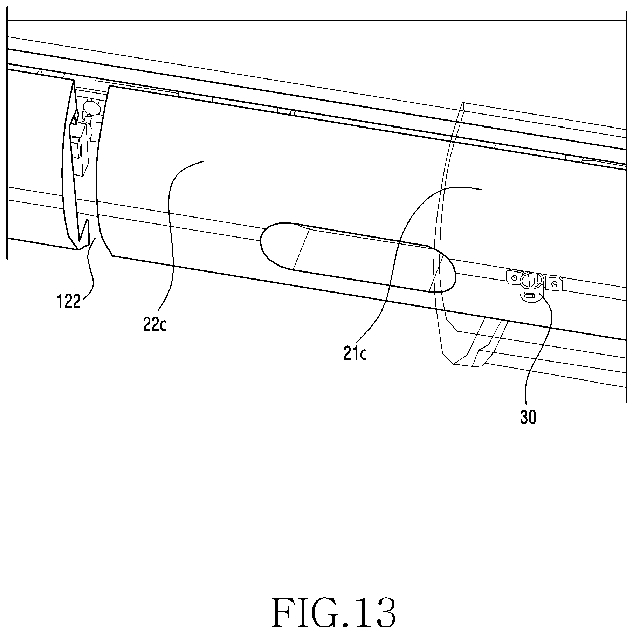

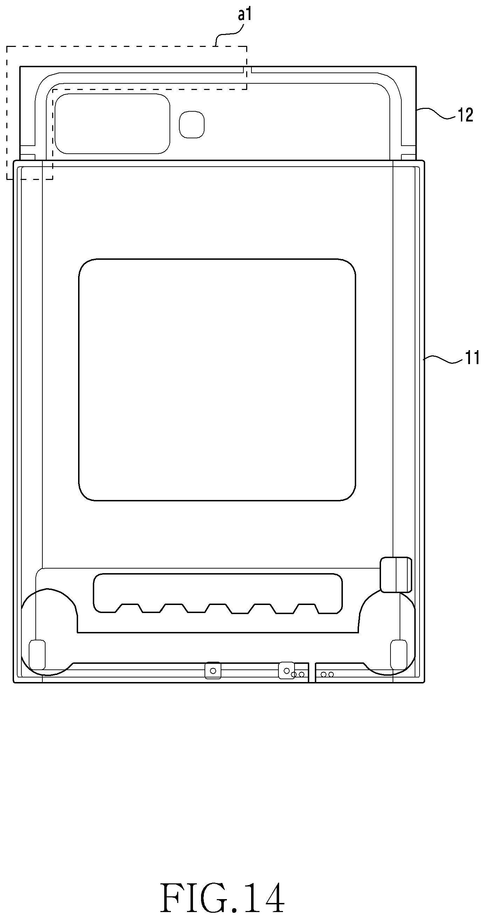

FIG. 13 is a perspective view illustrating a contact structure disposed in an electronic device according to an embodiment of the present invention. FIG. 14 is a plan view illustrating that a contact structure is disposed close to a side member according to an embodiment of the present invention.

Referring to FIG. 13 and FIG. 14, a second side member 22c (e.g., the second side member 22c shown in FIG. 3A) of the electronic device (e.g., the electronic device 20 shown in FIG. 3A) according to an embodiment may include a metal material, a segment portion 122 may be formed in the second side member 22c, and thus at least a part of the second side member 22c may be used as an antenna radiator. If the first and second side members (e.g., 21c and 22c) are connected by the contact structure 30 according to an embodiment, the grounding structure between the first and second side members 21c and 22c may be provided. According to this grounding structure, the performance of an antenna a1 of the second housing 12 may be improved. For example, the segment portion 122 may be filled with an insulator.

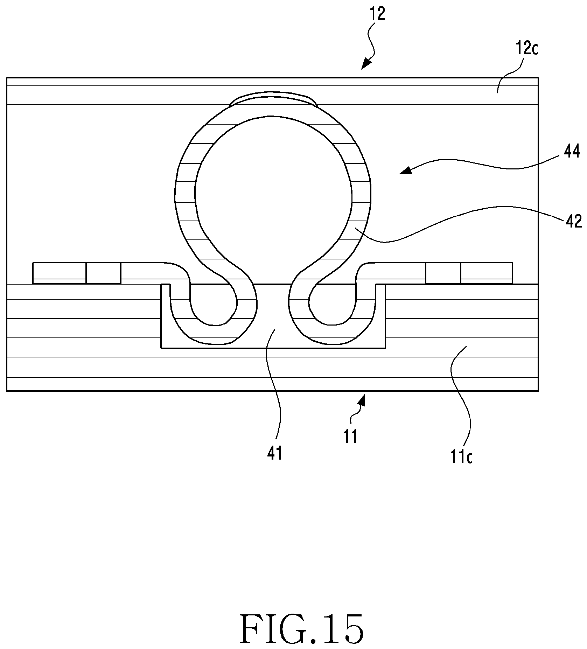

FIG. 15 is a cross-sectional side view illustrating a contact structure according to an embodiment of the present invention.

Referring to FIG. 15, according to an embodiment, a contact structure 44 may have a different arrangement, compared to the contact structure 30 shown in FIG. 6A through FIG. 6D. While the contact structure 30 shown in FIG. 6A through FIG. 6D is disposed on the second side member 12c of the second housing 12, the contact structure 44 according to an embodiment may be disposed on the first side member 11c of the first housing 11. According to an embodiment, the contact structure 44 may include a recess 41 formed in the first housing 11, and a contact member 42. Since the contact member 42 according to an embodiment has substantially the same structure as the contact member 32 shown in FIG. 6A through FIG. 6D, a detailed description on the structure of the contact member 42 shall be omitted.

According to an embodiment, the recess 41 is a box-shaped accommodation space, and may be formed on an inner surface overlapping the second side member 12c of the second housing 12 in the first side member 11c of the first housing 11. According to an embodiment, the recess 41 may be formed on an inner surface or a plurality of inner surfaces overlapping the second side member 12c of the second housing 12 in the first side member 11c of the first housing 11. According to an embodiment, the contact member 42 may be movably fixed with at least a part accommodated in the recess 41. According to an embodiment, the movement direction of the contact member 42 may form the deformation in any one of the sliding-in direction, the sliding-out direction, or the vertical direction of the second housing 12.

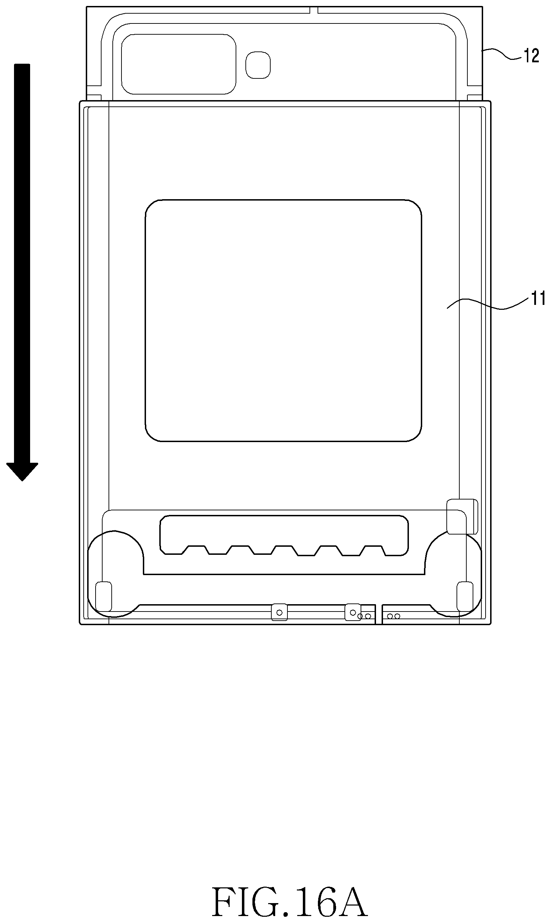

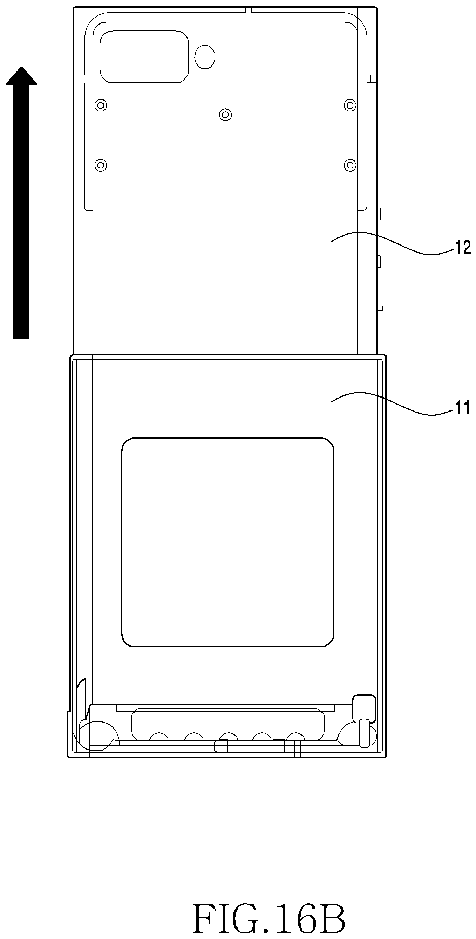

FIG. 16A is a plan view illustrating an electronic device in a sliding-in state according to an embodiment of the present invention. FIG. 16B is a plan view illustrating the electronic device in a sliding-out state according to an embodiment of the present invention.

Referring to FIG. 16A and FIG. 16B, according to an embodiment, if a contact structure (e.g., the contact structure 44 shown in FIG. 15) is disposed on the inner surface of the first side member 11c of the first housing 11, the contact structure 44 may be hidden regardless of the sliding-in/out state, and accordingly a sliding distance of the second housing 12 may be relatively increased.

According to an embodiment, an electronic device (e.g., the electronic device 10 shown in FIG. 1A) may include a first housing (e.g., the housing 11 shown in FIG. 1A) including a first surface (e.g., the first surface 11a shown in FIG. 1A) facing in a first direction, a second surface (e.g., the second surface 11b shown in FIG. 2) facing in a second direction (e.g., the second direction ② shown in FIG. 2) which is opposite to the first direction (e.g., the first direction ① shown in FIG. 2), and a first side member (e.g., the first side member 11b shown in FIG. 2) including a metal material, and surrounding at least a part of a space between the first and second surfaces; a second housing (e.g., the second housing 12 shown in FIG. 1A) including a third surface (e.g., the third surface 12a shown in FIG. 2) facing in the first direction (e.g., the first direction ① shown in FIG. 2), a fourth side (e.g., the fourth surface 12b shown in FIG. 2) facing in the second direction (e.g., the second direction ② shown in FIG. 2), and a second side member (e.g., the second side member 12c shown in FIG. 2) including a metal material, and surrounding at least a part of a space between the third and fourth surfaces, the second housing coupled to the first housing to slide in or out with respect to the first housing; and a contact structure (e.g., the contact structure 30 of FIG. 6A) disposed on the second side member, and electrically connected to the first housing, and the contact structure (e.g., the contact structure 30 shown in FIG. 6A) may include a recess (e.g., the recess 31 shown in FIG. 6A) formed in the second side member; and a contact member (e.g., the contact member 32 shown in FIG. 6A) disposed to be accommodated in the recess (e.g., the recess 31 shown in FIG. 6A) with at least a part, having a symmetrical shape, and deformed along the sliding-in or sliding-out direction.

According to an embodiment, the contact member (e.g., the contact member 32 shown in FIG. 6A) may change in shape along the sliding direction.

According to an embodiment, the contact member (e.g., the contact member 32 shown in FIG. 6A) may include a first support portion (e.g., the first support portion 321 shown in FIG. 6A) fixed to one side of the recess (e.g., the recess 31 shown in FIG. 6A); a second support portion (e.g., the second support portion 322 shown in FIG. 6A) fixed to the other side of the recess (e.g., the recess 31 shown in FIG. 6A); a first bending portion (e.g., the first bending portion 323 shown in FIG. 6A) bent at least 90 degrees or more from the first support portion (e.g., the first support portion 321 shown in FIG. 6A); a second bending portion (e.g., the second bending portion 324 shown in FIG. 6A) bent at least 90 degrees or more from the second support portion (e.g., the second support portion 322 shown in FIG. 6A); and an elastic portion (e.g., the elastic portion 325 shown in FIG. 6A) formed by bending from the first and second bending portions, and having a curved shape when viewed in a direction perpendicular to the sliding direction.

According to an embodiment, the contact member (e.g., the contact member 32 shown in FIG. 6A) may have an omega shape, when viewed in a front direction perpendicular to the sliding direction.

According to an embodiment, the first bending portion (e.g., the first bending portion 323 shown in FIG. 6A) and the second bending portion (e.g., the second bending portion 324 shown in FIG. 6A) may be accommodated at least in part in the recess (e.g., the recess 31 shown in FIG. 6A) respectively.

According to an embodiment, the first and second bending portions and the elastic portion (e.g., the elastic portion 325 shown in FIG. 6A) may be tilted clockwise or counterclockwise within the recess (e.g., the recess 31 shown in FIG. 6A) according to the sliding in/out.

According to an embodiment, the elastic portion (e.g., the elastic portion 325 shown in FIG. 6A) may further include a connection protrusion (e.g., the connection protrusion 326 shown in FIG. 6A) at a center of an outer surface.

According to an embodiment, the connection protrusion (e.g., the connection protrusion 326 shown in FIG. 6A) may extend along the outer surface of the elastic portion (e.g., the elastic portion 325 shown in FIG. 6A).

According to an embodiment, the contact structure (e.g., the contact structure 30 shown in FIG. 6A) may be disposed asymmetrically on one side of the second housing (e.g., the second housing 12 shown in FIG. 1A), or disposed symmetrically on both sides.

According to an embodiment, the contact member (e.g., the contact member 33 shown in FIG. 6A) may be in a bilateral symmetrical shape based on a reference line (e.g., the reference line 11 shown in FIG. 6B) when viewed in the front direction perpendicular to the sliding direction.

According to an embodiment, the contact member (e.g., the contact member 33 shown in FIG. 6A) may be a ground member, to contribute to antenna radiator performance improvement of the second side member.

According to an embodiment, a flexible display (e.g., the flexible display 13 shown in FIG. 1A) connected to the first and second housings respectively, and expanding a display region if the second housing slides out may be further included.

According to an embodiment, a contact member of an electronic device including a first housing (e.g., the first housing 11 shown in FIG. 1A), a second housing (e.g., the second housing 12 shown in FIG. 1A) for sliding in or out while remaining parallel to the first housing, and the contact member (e.g., the contact member 32 shown in FIG. 6A) disposed between the first and second housings to electrically connect the first and second housings, may include, in a symmetrical shape based on a reference line, when viewed from a front direction perpendicular to the sliding direction, a first support portion (e.g., the first support portion 321 shown in FIG. 6A); a second support portion (e.g., the second support portion 322 shown in FIG. 6A); a first bending portion (e.g., the first bending portion 323 shown in FIG. 6A) bent at least 90 degrees or more from the first support portion (e.g., the first support portion 321 shown in FIG. 6A); a second bending portion (e.g., the second bending portion 324 shown in FIG. 6A) bent at least 90 degrees or more from the second support portion (e.g., the second support portion 322 shown in FIG. 6A); and an elastic portion (e.g., the elastic portion 325 shown in FIG. 6A) formed by bending from the first and second bending portions, and having a curved shape.

According to an embodiment, the contact member (e.g., the contact member 32 shown in FIG. 6A) may include an omega shape, when viewed in a front direction perpendicular to the sliding direction.

According to an embodiment, the contact member (e.g., the contact member 32 shown in FIG. 6A) may be disposed on a side member of a metal material serving as a radiator of the second housing.

According to an embodiment, the contact member (e.g., the contact member 32 shown in FIG. 6A) may be disposed such that at least the first and second bending portions (e.g., the first and second bending portions 323 and 324 shown in FIG. 6A) are accommodated in the recess (e.g., the recess 321 shown in FIG. 6A) formed in the side member.

According to an embodiment, the contact member (e.g., the contact member 33 shown in FIG. 6A) may include at least one or more stoppers to prevent excessive movement of the elastic portion (e.g., the elastic portion 325 shown in FIG. 6A).

According to an embodiment, the stopper (e.g., the stoppers 401 and 402 shown in FIG. 7A) may include a first stopper (e.g., the first stopper 401 shown in FIG. 7A) having a shape by bending and standing upright from the first support portion (e.g., the first support portion 321 shown in FIG. 6A); and a second stopper (e.g., the second stopper 402 shown in FIG. 7A) bending and standing upright from the second support portion (e.g., the second support portion 322 shown in FIG. 6A), and facing the first stopper (e.g., the first stopper 401 shown in FIG. 7A).

According to an embodiment, the contact member (e.g., the contact member 33 shown in FIG. 6A) may include at least one or more guide walls (e.g., the guide walls 421 and 422 shown in FIG. 8A) for connection safety of the elastic portion (e.g., the elastic portion 325 shown in FIG. 6A).

According to an embodiment, the guide wall may include a first guide wall (e.g., the first guide 421 shown in FIG. 8A) bent having a shape by bending and standing upright from the first support portion (e.g., the first support portion 321 shown in FIG. 6A), and configured as a pair; and a second guide wall (e.g., the second guide wall 422 shown in FIG. 8A0 having a shape by bending and standing upright from the second support portion (e.g., the second support portion 322 shown in FIG. 6A), and configured as a pair.

## Claims

1. An electronic device comprising:
a first housing comprising a first surface facing in a first direction, a second surface facing in a second direction opposite to the first direction, and a first side member comprising a metal material, and surrounding at least a part of a space between the first and second surfaces;
a second housing comprising a third surface facing in the first direction, a fourth side facing in the second direction, and a second side member comprising a metal material, and surrounding at least a part of a space between the third and fourth surfaces, the second housing coupled to the first housing to slide in or out with respect to the first housing; and
a contact structure disposed on the second side member, and electrically connected to the first housing,
wherein the contact structure comprises:
a recess formed in the second side member; and
a contact member disposed to be accommodated in the recess with at least a part, having a symmetrical shape, and deformed along the sliding-in or sliding-out direction.

2. The electronic device of claim 1, wherein at least a part of the contact member changes in shape along the sliding direction.

3. The electronic device of claim 1, wherein the contact member comprises:
a first support portion fixed to one side of the recess;
a second support portion fixed to the other side of the recess;
a first bending portion bent at least 90 degrees or more from the first support portion;
a second bending portion bent at least 90 degrees or more from the second support portion; and
an elastic portion formed by bending from the first and second bending portions, and having a curved shape when viewed in a direction perpendicular to the sliding direction.

4. The electronic device of claim 3, wherein the contact member has an omega shape, when viewed in a front direction perpendicular to the sliding direction.

5. The electronic device of claim 3, wherein the first bending portion and the second bending portion are accommodated at least in part in the recess respectively.

6. The electronic device of claim 5, wherein the first and second bending portions and the elastic portion are tilted clockwise or counterclockwise within the recess according to the sliding in/out.

7. The electronic device of claim 3, wherein the elastic portion further comprises a connection protrusion at a center of an outer surface.

8. The electronic device of claim 7, wherein the connection protrusion extends along the outer surface of the elastic portion.

9. The electronic device of claim 1, wherein the contact structure is disposed asymmetrically on one side of the second housing, or disposed symmetrically on both sides.

10. The electronic device of claim 1, wherein the contact member is in a bilateral symmetrical shape based on a reference line when viewed in the front direction perpendicular to the sliding direction.

11. The electronic device of claim 1, wherein the contact member is a ground member, to secure antenna radiator performance of the second side member.

12. The electronic device of claim 1, further comprising:
a flexible display connected to the first and second housings respectively, and expanding a display region if the second housing slides out.

13. A contact member of an electronic device comprising a first housing, a second housing for sliding in or out while remaining parallel to the first housing, and the contact member disposed between the first and second housings to electrically connect the first and second housings, comprising:
in a symmetrical shape based on a reference line, when viewed from a front direction perpendicular to the sliding direction,
a first support portion;
a second support portion;
a first bending portion bent at least 90 degrees or more from the first support portion;
a second bending portion bent at least 90 degrees or more from the second support portion; and
an elastic portion formed by bending from the first and second bending portions, and having a curved shape.

14. The contact member of claim 13, wherein the contact member comprises at least one or more stoppers to prevent excessive movement of the elastic portion, and
the stopper comprises,
a first stopper having a shape by bending and standing upright from the first support portion; and
a second stopper bending and standing upright from the second support portion, and facing the first stopper.

15. The contact member of claim 13, wherein the contact member comprises at least one or more guide walls for connection safety of the elastic portion,
the guide wall comprises,
a first guide wall bent having a shape by bending and standing upright from the first support portion, and configured as a pair; and
a second guide wall having a shape by bending and standing upright from the second support portion, and configured as a pair.
